# EUROPEAN PATENT APPLICATION

(11) **EP 4 740 750 A2**
(43) Date of publication of application: **13.05.2026**
(21) Application number: 26158859.4
(22) Date of filing: 03.05.2018
(51) Int. Cl.: A23L 29/00

(54) **PROCESSING AID FOR THE PREPARATION OF BAKERY PRODUCTS**

(30) Priority: 27.03.2018 IT 201800003985
(62) Divisional of application: 18728234.8
(71) Applicant: Il Granaio delle Idee Srl, 35020 Masera' di Padova (PD) (IT)
(72) Inventor: ALLAMPRESE MANES ROSSI, Federico, I-35020 Masera' di Padova (PD) (IT)
(74) Representative: Porta & Consulenti Associati S.p.A.

(57) **Abstract**

The invention is a process for the formation of natural emulsifiers, characterized in that it comprises the use of brewer's yeast or *Saccharomyces cerevisiae,* the metabolism of which produces glycerol, heterofermentative lactic acid bacteria, which produce lactic acid, enzymes accessible to lactic acid bacteria for the formation of lactic acid, and wherein the esterification process between glycerol and lactic acid or acetic acid, or both, leads to the formation of emulsifier molecules.

## Description

The present invention concerns processing aids for the preparation of bakery products, and a new process for the formation of emulsifiers without the use of technological or chemical additives is also disclosed.

The present patent concerns also a completely natural processing aid, comprising lactic acid bacteria and enzymes, for the preparation of bakery products.

At present in Italy bread-making methods can be divided in the following categories:

### - Sourdough

This is the most ancient bread-making method. Sourdough is a mixture of water and flour which is left to ferment spontaneously, with the consequent generation and conservation of some yeasts and microflora which vary according to the environment and the raw materials used.

Sourdough usually contains lactic acid bacteria of various types and a small share of yeasts. In sourdough there are microorganisms that produce enzymes, lactic acid and acetic acid.

The use of sourdough in bread-making poses some drawbacks: difficult conservation, need for more labour, very long rising times, impossibility to guarantee the standardization of the finished product. If the acidity of sourdough is high, this produces unpleasant smells and weakens the gluten mesh of the dough obtained. The interest in products made with this method is increasingly widespread in the market, as this method is perceived as "authentic" and "healthy" by consumers. However, owing to these very characteristics, meaning vitality, variability of the yeasts-bacteria ratio, need for special conservation methods, long rising times, etc., sourdough is not used at an industrial level, being used only in the production of some specific traditional products such as, for example, "panettone".

### - Indirect dough method

According to this method, the dough is made in 2 steps: in the first step a premixture is produced (biga or poolish, which differentiate from each other according to the quantity of water and the quantity of yeast used); in the second step all the other ingredients required by the recipe are added. This is a work method which is considered traditional and guarantees a high quality level, though posing several drawbacks: it requires the use of more expensive and stronger flours, very long rising times, precise control of temperature parameters and fermentation times, the use of proofing chambers, and at the same time it does not guarantee a standard quality of the finished product.

### - Straight dough method with additives

According to CE regulation 1333/2008, Art. 3 paragraph 2, the following definition applies:
*a) 'food additive' shall mean any substance not normally consumed as a food in itself and not normally used as a characteristic ingredient of food, whether or not it has nutritive value, the intentional addition of which to food for a technological purpose in the manufacture, processing, preparation, treatment, packaging, transport or storage of suchfood results, or may be reasonably expected to result, in it or its by-products becoming directly or indirectly a component of such foods.*

Additives must be specified in the label and are commonly identified by three-digit numbers preceded by letter E.

According to the straight dough method, all the ingredients are mixed together in a single step. This is the most practical and quickest method but at the same time it is also the method the offers lower performance levels.

For this reason, since the Fifties different types of additives have been introduced in the bread-making sector, mainly mono and diglycerides of fatty acids E471, esters of the mono and diglycerides of fatty acids E472 and ascorbic acid E300. While the additives E471 and E472 are added directly into the dough, ascorbic acid can be used also in mills as a flour processing agent. Contrary to many other additives, it leaves no trace in the product at the end of the baking process, as it is denatured by high temperatures, therefore it can be omitted from the label and considered exactly as a technological processing aid though being an additive.

The additives E471 are used in the bakery sector as emulsifiers, thanks to their chemical structure. The three hydroxyl groups (OH) of glycerol make this molecule polar and thus soluble in water. In the mono and diglycerides of fatty acids there are one or two hydroxyl groups which are "occupied" by the fatty acids that are bonded to the glycerol molecule through condensation. Fatty acids are non-polar molecules and therefore are insoluble in water. These molecules, constituted by a polar part and a non-polar part, are defined as amphipathic.

The additives E471 arrange their polar heads towards the outside and their non-polar tails towards the inside forming micelles, then position themselves between the surfaces of the two unmixable phases (water/water-based substances and oil/grease), thus reducing the interfacial tension and stabilizing the system.

An emulsion is an unstable system constituted by two parts that cannot be mixed with each other, therefore, the more stable this system is, the higher is the emulsifying effect, so that the food product will feature more stability and all of its components will remain bound to one another.

The straight dough method involves much shorter rising times and furthermore it is possible to use weaker and less expensive flours. The dough is very stable and a good standardization of the finished product is guaranteed. The organoleptic profile, however, is not optimal, and furthermore the additives used must be specified in the label.

### - Straight dough method with processing aids

According to CE regulation 1333/2008, Art. 3 paragraph 2, the following definition applies:
*a) 'processing aid' shall mean any substance which:*
   *(i) is not consumed as a food by itself;*
   *(ii) is intentionally used in the processing of raw materials, foods or their ingredients, to fulfil a certain technological purpose during treatment or processing; and*
   *(iii) may result in the unintentional but technically unavoidable presence in the final product of residues of the substance or its derivatives provided they do not present any health risk and do not have any technological effect on the final product.*

In the last 20 years synthesis improvers have been progressively replaced by various categories of enzymes having a fungal or bacterial origin. Enzymes are protein catalyzers, therefore they have complex structures from the molecular point of view (quaternary structure). Another fundamental characteristic is their very high specificity. Alpha-amilases, xylanases, proteases, lipases, cellulases are only some examples of the families of enzymes which have been introduced in processing aids and make it possible to obtain excellent finished products, though using doughs which are quick to make and easy to manage with the straight dough method.

By way of example, at present in the processing aids using enzymes the emulsifying effect is obtained through the use of the lipases, which brings about the drawbacks described below.

The action of the lipases on fats consists in detaching from glycerol fatty acids with short chain (C4:0 to C8:0), medium chain (ClO:O to C12:0) and long chain (C14:0 to C18:0). Short chain fatty acids such as butyric acid, caprylic acid and caproic acid may cause the product to give off unpleasant, strong, pungent smells; on the other hand, medium chain fatty acids are responsible for a soapy taste. Furthermore, ketones and aldehydes that give off a rancid smell are produced by the oxidation of free unsaturated fatty acids.

It is the object of the present invention to provide a dough without chemical improvers or emulsifiers or lipases, but capable of ensuring the advantages of the doughs used in the straight dough methods.

Brewer's yeast (*Saccharomyces cerevisiae*), which is commonly used in bread-making, produces alcoholic fermentation In conditions of anaerobiosis.

Initially, due to reasons related to oxidative balance, the metabolism is brought towards glycerol pyruvate fermentation, so a trivalent alcohol will be produced: glycerol.

This molecule is the basis which makes it possible to naturally produce emulsifier molecules such as mono and diglycerides of fatty acids and esters of mono and diglycerides of fatty acids.

If in the system there is only *Saccharomyces cerevisiae,* fermentation products such as fatty and carboxylic acids, which esterify with glycerol, will be lacking.

Therefore, microorganisms with a different type of metabolism are selected: lactic acid bacteria.

Lactic acid bacteria include different types of bacteria (*Streptococcus, Lactococcus, Lactobacillus, Pediococcus, Oenococcus, Leuconostoc ecc*), which can be subdivided according to their metabolism into homofermentative, obligate heterofermentative and facultative heterofermentative.

Since the present invention is intended to be used in bakery products, different types of heterofermentative lactic acid bacteria, meaning that they do not produce only lactic acid, have been selected in order to obtain a complete and balanced aromatic profile.

By way of example, the lactic acid bacteria of the type *Lactobacillus Sanfranciscensis, Lactobacillus Rossiae, Lactobacillus Plantarum* are especially and effectively used.

In the new processing aid that is the subject of the present invention the number of lactic acid bacteria colonies used is equal to the number of CFU/g present in the sourdough.

More specifically, in the new processing aid which is the subject of the present invention the number of lactic acid bacteria colonies used is equal to the number of CFU/g present in the sourdough (water and flour mixture left to ferment spontaneously) after 72 hours of fermentation, thus they are approximately 1x10^9 CFU/g, amounting to 80% of the total microbial population.

Furthermore, a mixture of enzymes, or enzyme blend, is used, which ensures a high availability of sugars with five carbon atoms, for two reasons: 1) they are accessible only to lactic acid bacteria; 2) acetic acid will be certainly produced. If only sugars with six carbon atoms were available, the microorganisms would be in competition, as this type of sugar is accessible to both lactic acid bacteria and yeasts. Since the latter are extremely competitive, they would use most of it to the detriment of lactic acid bacteria, which would be able to reproduce and to implement their metabolic activity only to a very limited extent. In order to resolve this problem, enzymes which make it possible to obtain sugars with five carbon atoms are selected. Yeasts do not have on their plasma membrane the permeases which are necessary to let this type of sugar get into the cell, so this sugar remains available only for the lactic acid bacteria which can implement their metabolism without any type of competition.

In the new processing aid which is the subject of the present invention, the key function is served by the enzyme known as xylanase.

Even if all the xylanases are endo-acting, they can present a variation in term of subproducts. Some enzymes generate mainly xylose and xylobiose and others generate mainly xylotriose or a range of other oligosaccharides.

In the new processing aid a xylanase has been selected, which hydrolizes the beta-(1,4)-D-xylosidic bonds in arabinoxylane, removing xylose from the nonreducing end.

Xylanases are produced by the fermentation of both bacteria and fungi. The enzyme, which is a specific protein, is separated and purified from the initial microorganism, of which no traces remain.

At this point, all the elements necessary to allow esterification processes to take place in a natural manner are present: alcohol (glycerol) and fatty acids (lactic acid and acetic acid). An ester bond is created through condensation between glycerol and lactic acid or acetic acid or both, which leads to the formation of emulsifier molecules such as: esters of mono and diglycerides of fatty acids, lactic esters, acetic esters. Some molecular structures of examples are illustrated here below.

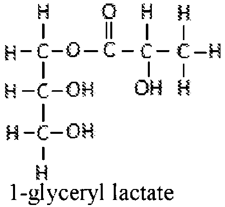

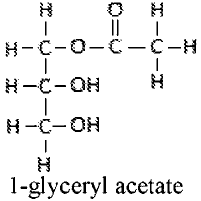

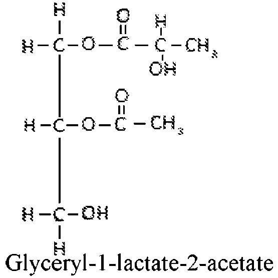

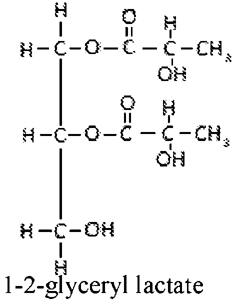

The correct selection of lactic acid bacteria and enzymes has made it possible to create the conditions for the formation of emulsifiers, which are usually of synthetic origin, in a natural manner, therefore they do not need to be specified in the label.

The new process for the formation of natural emulsifiers includes the use of:
- the new processing aid that is the subject of the present invention, in turn comprising lactic acid bacteria and enzymes as described above;
- brewer's yeast or *Saccharomyces cerevisiae,* the metabolism of which produces glycerol.

The processing aid which is the subject of the present invention is completely natural and thus comprises lactic acid bacteria and enzymes which, thanks to the presence of brewer's yeast in the dough, generate the formation of completely natural emulsifiers through esterification.

It is different from the processing aids used in other bread-making methods, because it is used with the straight dough method, maintaining characteristics of practicality and standardization while at the same time its microflora is similar to that of sourdough.

## Claims

1. Processing aid for the preparation of bakery products, **characterized in that** it comprises heterofermentative lactic acid bacteria of the species *Lactobacillus Sanfranciscensis, Lactobacillus Rossiae* and *Lactobacillus Plantarum* and xylanase.

2. Processing aid according to claim 1, wherein the xylanase hydrolizes the beta-(1,4)-D-xylosidic bonds in arabinoxylane, removing xylose from the nonreducing end.

3. Dough for the preparation of bakery products, **characterized in that** it comprises:
• processing aid according to any of the claims from 1 to 2;
• flour.
